# EUROPEAN PATENT SPECIFICATION

(11) **EP 4 556 577 B1**
(45) Date of publication and mention of the grant of the patent: **12.11.2025**
(21) Application number: 23210908.2
(22) Date of filing: 20.11.2023
(51) Int. Cl.: C14B 17/00, D06H 3/08, G01N 21/88

(54) **APPARATUS WITH IMPROVED LIGHTING MANAGEMENT**
VORRICHTUNG MIT VERBESSERTER BELEUCHTUNGSVERWALTUNG
APPAREIL À GESTION D'ÉCLAIRAGE AMÉLIORÉE

(43) Date of publication of application: 21.05.2025
(73) Proprietor: Comelz S.p.A., 27029 Vigevano (IT)
(72) Inventor: CORSICO PICCOLINO, Alessandro, 27029 Vigevano (PV) (IT)
(74) Representative: Botti & Ferrari S.p.A.

(56) References cited:
- EP-A1- 2 787 485
- WO-A1-92/03721
- FR-A1- 3 134 327
- FR-A1- 3 138 188
- US-A1- 2001 012 107

## Description

### Field of application

The present invention relates to an apparatus for the inspection of fabrics, in particular for the inspection of leather for various items of the leatherwear, clothing, footwear, automotive sectors, and the following description is made with reference to this application field with the only purpose of simplifying the exposition thereof. In some embodiments, the apparatus can also be a material cutting machine, in particular for leather cutting.

### Prior art

As it is well known in this specific technical field, there are inspection apparatuses whereon fabrics (in particular, leather) to be inspected prior to the cutting thereof are arranged. During the inspection, the fabrics arranged on these apparatuses are analysed by the operator to detect and mark all the occurring defects, which are recorded and stored in a digital file; in addition, or alternatively, it is also possible to acquire images of the leather to be analysed without manually marking the defects, said images being then processed via the software. Indeed, each type of fabric, even of the best quality, may have surface defects, such as for instance small spots, surface alterations, low quality areas. For this reason, in the context of quality control, it is important to identify and report any defects before further processing.

In connection with the subsequent processing of the material, there are apparatuses that are able to perform the automated sheet cutting according to a predefined cutting pattern. In particular, there are the so-called cutting tables or benches, that do not envisage the presence of a closed cutting chamber (and generally not even of a conveyor belt) but only of a work-plane (generally fixed) whereon the material to be cut is arranged. Generally, in said apparatuses there is at least one track for the sliding of carriages that move at least one transversely extending beam or arm, which supports a movable cutting unit on said arm to cut the sheet arranged on the work-plane. There are also cutting machines having a cutting chamber (for instance box-shaped) into which the material is fed through a conveyor belt, which then transports the cut portions to an unloading area.

A problem, which is shared by all these apparatuses, is linked to the lighting of the work area, where different operations and/or different materials may require a respective different lighting mode to work under optimal conditions. This is particularly critical in leather-inspection machines, in which the defect detection is closely linked to the selected lighting and often there is the need to change lighting modes, both when changing the type of leather to be inspected and during the inspection of a single leather; indeed, there are defects which can only be detected by selecting a certain type of suitable lighting.

US 2001/0012107 A1 discloses an apparatus for inspecting a printed circuit board comprising coaxial light projecting means.

Therefore, it would be desirable to effectively manage the lighting based on the current needs that may vary, which the known apparatuses are not able to do.

The technical problem of the present invention is to provide an apparatus having structural and functional features such as to allow overcoming the limitations and drawbacks which still affect the known solutions, in particular an apparatus having an improved lighting control, allowing, for instance, the management of different types of leather and/or different operations to be performed effectively and with great ease.

Another object of the present invention is to provide an apparatus that enables to easily detect any type of defect of the inspected material, and, more generally, to facilitate the inspection of the material by operators.

### Summary of the invention

The solution idea underlying the present invention is to provide an apparatus in which many different light sources from different directions are present, in particular different grazing lights in order to allow a very efficient inspection of the material. The lighting of the work-plane is adjusted through a control unit (which possibly has operating settings of the machine stored in its memory) based on the operator's needs, by selecting a particular lighting mode (for instance the intensity or type of lights that are turned on) among the various possible modes and consequently adjusting the lighting system. The result is a versatile system in which, based on the operator's selection, the desired lighting is consequently set up, so as to always obtain the optimal lighting conditions, for instance based on the material on the work-plane or based on the operation that the machine must perform. These operations may occur automatically, for instance by selecting a precise working mode of the apparatus which involves a specific combination of parameters, or even through a specific selection of particular parameters by the user, all this in any case involving the lighting system control by the control unit (for instance, in case of a manual adjustment, the control unit is used to control a panel for adjusting the single lights). Suitably, there are different sets of lights grazing on the work-plane, said different sets being oriented relative to each other differently with respect to said work-plane (both frontally and sideways) and being selectable and adjustable, even relatively to each other, to analyse any aspect of the leather on the work-plane and detect any surface defect.

Based on this solution idea, the above technical problem is solved by an apparatus for the inspection and/or processing of a material, in particular leather, comprising a work-plane adapted to provide a support surface for the material, said work-plane including at least one first pair of opposite sides, for instance of greater extension, and at least one second pair of opposite sides, for instance of smaller extension, a control unit adapted to manage the apparatus, and a lighting system comprising at least one first set of light sources arranged and configured to illuminate the work-plane from an elevated position with respect to said work-plane, according to a first incidence angle with said work-plane, and a second set of light sources arranged and configured to emit grazing light on the work-plane, according to a second incidence angle with said work-plane, said second incidence angle being smaller than the first incidence angle, wherein the second set of light sources comprises a first plurality of light sources arranged at at least one of the two opposite sides of the first pair of opposite sides, and a second set of light sources arranged at at least one of the two opposite sides of the second pair of opposite sides.

More particularly, the invention comprises the following additional and optional features, taken individually or in combination if needed.

According to an aspect of the present invention, the apparatus may be configured to allow adjusting (automatically based on a selected mode or even manually by the operator) at least the relative intensity and/or the relative colour temperature between said pluralities of grazing lights.

More generally, the apparatus may be configured to allow a relative adjustment between the first plurality of light sources and the second plurality of light sources, for example by adjusting the relative intensity (and/or possibly the colour temperature) between said light sources.

In addition or as an alternative, according to an aspect of the present invention, the apparatus may be configured to allow a relative adjustment of the first set of light sources and the second set of light sources.

In particular, according to an aspect of the present invention, the apparatus (for example the control unit) may be configured to allow the selective activation of one of the first set of light sources or the second set of light sources. Additionally or alternatively, the apparatus (for example the control unit) may be configured to adjust the relative intensity between the first set of light sources and the second set of light sources, and thus to dim said sets of light sources according to different values.

According to an aspect of the present invention, the control unit may comprise a memory unit including a plurality of operating instructions, each operating instruction corresponding to a lighting mode of the lighting system, wherein the apparatus further comprises means configured to allow the selection of a lighting mode among the stored lighting modes, said control unit being configured to control the lighting system based on said selection.

According to an aspect of the present invention, the memory unit may comprise a plurality of previously stored instructions for a respective plurality of fabrics (materials, in particular different types of leather), each instruction corresponding to a specific lighting mode of the lighting system adapted to the relative fabric (material) and selectable through the control unit.

According to an aspect of the present invention, the control unit may be configured to set a first intensity and/or colour temperature of the lighting system and, in at least one second lighting mode, the control unit may be configured to set a second intensity and/or colour temperature of the lighting system which is different from the first intensity and/or colour temperature.

According to an aspect of the present invention, the lighting system may comprise a plurality of LEDs.

According to an aspect of the present invention, the second set of light sources may comprise, at the respective side/s of the work-plane, a plurality of light sources arranged side by side and a plurality of respective lenses configured to generate a light beam having an opening angle ranging between 5° and 25° (or also between 5° and 15°).

According to an aspect of the present invention, the second set of light sources may comprise, at the respective side/s of the work-plane, a plurality of light sources configured to generate a light beam having an incidence angle with the work-plane ranging between 0 and 30°, wherein also negative angles are possible, anyway such as to ensure the desired grazing.

According to an aspect of the present invention, the second set of light sources may comprise a plurality of light sources arranged on at least two substantially parallel rows.

According to an aspect of the present invention, light sources arranged on a row may be configured to generate a light beam having an incidence angle with the work-plane that is different from that of light sources arranged on another row.

According to an aspect of the present invention, the sides of the first pair of opposite sides may be sides of greater extension, and the sides of the second pair of opposite sides may be side of smaller extension with respect to the above two sides (for instance adjacent to the sides of greater extension), wherein the first plurality of light sources is arranged at at least one of the two opposite sides of greater extension, and wherein the second set of light sources is arranged at at least one of the two opposite sides of smaller extension (preferably both sides of smaller extension), the work-plane preferably being rectangular-shaped.

According to an aspect of the present invention, the apparatus may comprise a support element adapted to support the lighting system.

According to an aspect of the present invention, the apparatus may comprise at least one image detector adapted to acquire images and/or videos of the material on the work-plane, wherein the control unit is configured to allow the switch of the lighting system at least between a first operating mode, which is adapted to allow the inspection of the material by the operator, and a second operating mode, which is adapted to allow the acquisition of images and/or videos by means of said at least one image detector and which corresponds to a different setting of the lighting system, wherein the optimal operating parameters of said image detector (i.e. the optimal parameters for the acquisition of images and/or videos) are possibly stored in the memory unit of the control unit and are optimized in relation to the setting of the lighting system in said second operating mode, wherein, in the switch between the first operating mode and the second operating mode, said parameters of the image detector are not modified.

According to an aspect of the present invention, the apparatus may further comprise at least one projector adapted to project elements onto the work-plane.

According to an aspect of the present invention, the control unit may be configured to define (possibly also dynamically) work areas, based on which the material arranged on the work-plane is virtually subdivided, and the projector may be configured to project profiles corresponding to said work areas onto the work-plane, each of said profiles being adapted to allow identifying a single work area by the operator, for instance to distinguish a single work area with respect to the other work areas.

According to an aspect of the present invention, the work areas are defined based on an acquired image of the material, for instance by means of an image detector (for instance the same detector previously described for the technical light).

According to an aspect of the present invention, the projector may be configured to project the profiles corresponding to the single work areas separately from each other, wherein the control unit is adapted to allow the selection of a specific profile and thus the switch of the projection of a profile to the projection of a different profile, and wherein said control unit is further adapted to control the lighting system based on the specific projected profile.

For instance, the control unit may be further configured to control the lighting system so as to turn off, or keep at a reduced intensity, light sources of the lighting system corresponding to (i.e. adapted to illuminate) non-projected work areas, for instance areas that have previously been put in connection with specific light sources by means of the central unit.

According to an aspect of the present invention, the projected profiles may be square- or rectangular-shaped.

According to an aspect of the present invention, the work-plane may be equipped with means adapted to allow the movement of the material along a travel direction, and the apparatus may comprise means to allow the actuation of the movement means based on a user's input.

According to an aspect of the present invention, the control unit may be configured to previously define the size of the base of the square or rectangular shape of the profile based on the shape of the material (in particular based on the extension of the material in a direction that is substantially orthogonal to the travel direction), and to adjust the size of the height of said square or rectangular shape of the projected profile according to the travel of the material along the travel direction.

Obviously, it is not necessary for the profile to have a closed shape (i.e. the above square or rectangular shape), but it can also be a line extending in a direction (for instance transversal) with respect to the travel direction and which is dynamically adapted based on the travel of the material, thus defining in this way the various work areas (horizontal areas) while the material travels.

According to an aspect of the present invention, the apparatus may further comprise at least one first projector and one second projector to project elements onto the work-plane, wherein the control unit is operatively connected to the first projector and to the second projector and comprises operating means configured to allow the selective activation of one of the first projector or the second projector, wherein the control unit is further configured to control the lighting system based on the activated projector, wherein said control unit is configured to automatically switch the lighting system from a first projection mode, when the first projector is selected, to a second projection mode, when the second projector is selected.

According to an aspect of the present invention, the first projector may comprise at least one laser source and the second projector may be a video projector.

According to an aspect of the present invention, the control unit may be configured to modify the intensity of the light emitted by the lighting system in the switch between the first projection mode and the second projection mode, and vice versa.

According to an aspect of the present invention, the apparatus may be a material (leather) inspection machine comprising a plurality of image detectors (for instance those previously described) adapted to acquire images of a fabric (material) on the work-plane, wherein the control unit is configured to process the images acquired by said image detectors and to generate a digital copy of the inspected fabric. Optionally, a signaling element adapted to indicate defects on the surface of the fabric may also be present.

The control unit may be further configured to correlate the defects on the fabric indicated by said signaling element with the acquired image of the fabric, or to automatically process the image and detect the defects without a notification from the user, in both cases with the possible generation of a report indicating at least the shape and position of the defects on said fabric.

In an embodiment of the present invention, the projector may comprise at least one laser projector, said laser projector being adapted to project, in addition to the profile, also defects of the material identified by the operator within the work area through the signaling element.

According to an aspect of the present invention, the control unit may be configured to define a plurality of cutting areas (quality areas) on the digitized image, the type, number, and position of said cutting areas being defined and optimized based on the information acquired by said control unit during the inspection of the fabric.

According to an aspect of the present invention, the apparatus may be a cutting machine comprising at least one cutting unit adapted to cut the material arranged on the work-plane.

The present invention also relates to an apparatus for the inspection and/or processing of a material, in particular leather, comprising a work-plane adapted to provide a support surface for the material (said work-plane for instance including at least one first pair of opposite sides, for instance of greater extension, and at least one second pair of opposite sides, for instance of smaller extension), a control unit adapted to manage the apparatus, a lighting system, and at least one projector to project elements onto the work-plane, wherein the control unit is configured to define work areas, based on which the material arranged on the work-plane is virtually subdivided, and the projector is configured to project profiles corresponding to said work areas onto the work-plane, each of said profiles being adapted to identify (allow the identification, for instance by the operator) a single work area (for instance with respect to the other work areas).

Hereinafter advantageous and optional aspects of this invention relating to this specific apparatus herein described, i.e. of the apparatus able to define and project the various work areas, will be described.

According to an aspect, the apparatus comprises at least one image detector and the work areas are defined based on an acquired image of the material by means of said image detector and processed by the control unit.

According to an aspect, the projector may be configured to project the profiles corresponding to the single work areas separately from each other, wherein the control unit is adapted to allow the selection of a specific profile and thus the switch of the projection of a profile to the projection of a different profile, and wherein said control unit is further adapted to control the lighting system based on the specific projected profile.

For instance, the control unit may be further configured to control the lighting system so as to turn off, or keep at a reduced intensity, light sources of the lighting system corresponding to (i.e. adapted to illuminate) non-projected work areas, for instance areas that have previously been put in connection with specific light sources by means of the central unit.

According to an aspect, the projected profiles may be square- or rectangular-shaped.

According to an aspect, the work-plane may be equipped with movement means configured to allow the movement of the material along a travel direction, and the apparatus may comprise means to allow the actuation of the movement means based on a user's input.

According to an aspect, the control unit may be configured to define the size of the base of the square or rectangular shape of the projected profile (i.e. the side extending along a direction that is orthogonal to the travel direction) based on the shape of the material (in particular based on the extension of the material in said direction that is substantially orthogonal to the travel direction), and to adjust the size of the height of said square or rectangular shape of the projected profile (i.e. of a side extending along the travel direction) according to the travel of the material along the travel direction.

Obviously, it is not necessary for the profile to have a closed shape (i.e. the above square or rectangular shape), but it can also be a line extending in a direction (for instance transversal) with respect to the travel direction and which is dynamically adapted based on the travel of the material, thus defining in this way the various work areas (horizontal areas) while the material travels.

According to an aspect, the apparatus may be an inspection machine (in particular, of leather) comprising at least one image detector (in particular, a plurality of detectors, for instance the aforementioned detectors that have been defined before for the subdivision into the various work areas) adapted to acquire images of a fabric (of the material, i.e. of the surface thereof) on the work-plane, wherein the control unit is configured to process the images acquired by said image detectors and to generate a digital copy of the inspected material (for instance leather). Optionally, a signaling element adapted to indicate defects on the surface of the material may also be present.

The control unit may further be configured to correlate the defects on the material indicated by said signaling element with the acquired image of the material, or to automatically process the image and detect the defects without a notification from the user, in both cases with the possible generation of a report indicating at least the shape and position of the defects on said inspected material, i.e. surface defects.

In an embodiment, the projector may comprise at least one laser projector, said laser projector being adapted to project, in addition to the profile, also defects of the material identified by the operator within the work area corresponding to the profile that has been projected through the signaling element. The projected elements may thus be the profiles and even the defects.

According to an aspect, the control unit may be configured to define a plurality of cutting areas (quality areas) on the digitized image, the type, number, and position of said cutting areas being defined and optimized based on the information acquired by said control unit during the inspection of the material.

The features and advantages of the apparatus according to the invention will become apparent from the following description of an embodiment thereof, given by way of non-limiting example with reference to the accompanying drawings.

### Brief description of the drawings

In those drawings:
- figure 1 shows a schematic perspective view of an apparatus according to an embodiment of the present invention;
- figure 2 shows a frontal view of the apparatus of figure 1;
- figure 3 shows a sectional side view of the apparatus of figure 1;
- figure 4 shows a detail of the apparatus according to an embodiment of the present invention;
- figure 5 shows another perspective view of the apparatus of figure 1;
- figure 6A shows an example of virtual subdivision of a material into different work areas, and figure 6B shows an example of a projected work area according to an embodiment of the present invention; and
- figure 7 shows an alternative embodiment of the present invention.

### Detailed description

With reference to those figures, an apparatus (or machine) according to the present invention is globally and schematically indicated with reference number 1.

It is worth noting that the figures represent schematic views and are not drawn to scale, but instead they are drawn so as to emphasize the important features of the invention. Moreover, in the figures, the different elements are depicted in a schematic manner, their shape varying depending on the application desired. It is also worth noting that in the figures the same reference numbers refer to elements that are identical in shape or function. Finally, particular features described in relation to an embodiment illustrated in a figure are also applicable to the other embodiments illustrated in the other figures.

It is further noted that, unless expressly indicated, the process phases may also be reversed if necessary.

Moreover, the positional references used in the present description, comprising indications such as lower or upper, above, or below, or similar phrases, are referred to the operating configuration shown in the figures, and in no case should they be assigned a limiting meaning. In any case, said references, when referred to the components of the apparatus of the present invention, are used in practice by a skilled person.

To facilitate the following description of the apparatus 1, by way of example two orthogonal directions are identified: an Y direction and an X direction.

In a preferred embodiment, the apparatus 1 is a fabric inspection machine, in particular leather, for making clothing, leatherwear, footwear, automotive and furniture items. The apparatus 1 is thus preferably suitable for the inspection of leather material, even if other materials are obviously possible.

However, it is noted that the teachings of the present invention are not only limited to an apparatus for fabric inspection, but also apply to an apparatus for cutting fabrics, in particular leather, as it will be detailed hereinafter. Therefore, we can state that in general the apparatus according to the present invention is an apparatus for processing and/or inspecting material to be cut.

In any case, most of the following description illustrates as a preferred non-limiting example an apparatus for the inspection of leather, whereas at the end of the description a brief example of a cutting apparatus will also be provided, wherein the inventive teachings are the same for both said apparatuses.

Moreover, in the context of the present invention, the term "sheet" indicates any element of any shape and material (in particular leather), and essentially of two-dimensional size, having a certain thickness (generally reduced), that needs to be inspected/processed through the apparatus 1, also unwound from a roll. In general, said material is also indicated as flat material, obviously without limiting the shape or composition thereof.

In general, the apparatus 1 comprises a control unit C, including a suitable memory unit (indicated with reference MEM) and suitably programmed and in charge of the automatic management and control thereof. The control unit C may be for instance a computerized unit, which is integrated or external to the apparatus 1 and operatively connected thereto. Moreover, it is noted that the control unit C may be a single control unit or may comprise a plurality of local and/or remote units. The control unit C is thus able to control the apparatus 1 to obtain the automated operation thereof. In any case, the present invention is in no way limited by the architecture used for the control unit C, which in general may be any suitable computerized unit, comprising one or more units (possibly also including components for the interaction with the operator, such as screens, buttons, and the like) arranged in any way according to the needs and/or circumstances. It is further noted that, in the context of the present invention, even the selection and user interaction means can be considered as part of the control unit C.

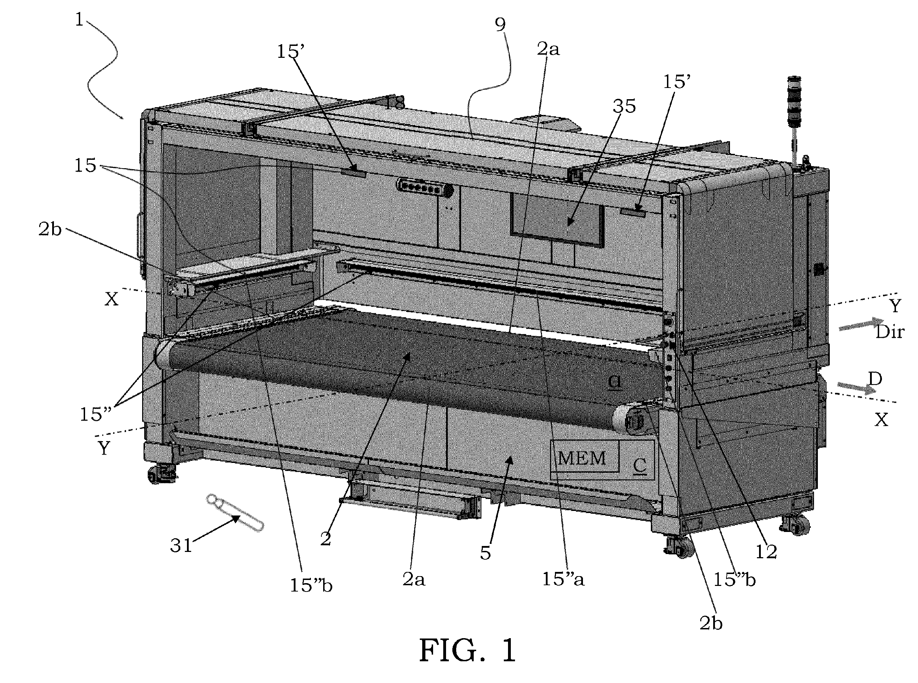

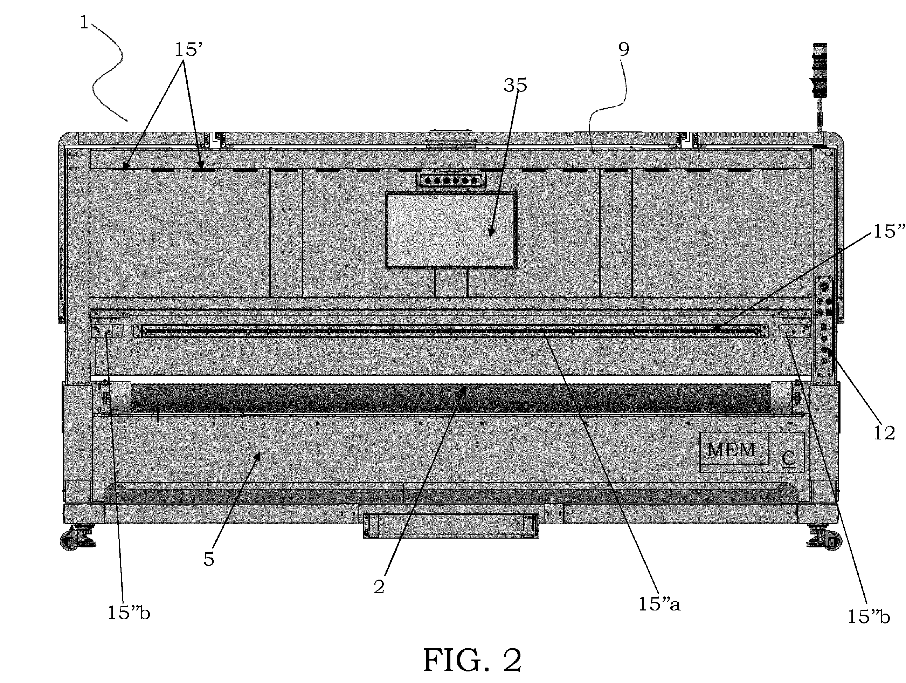

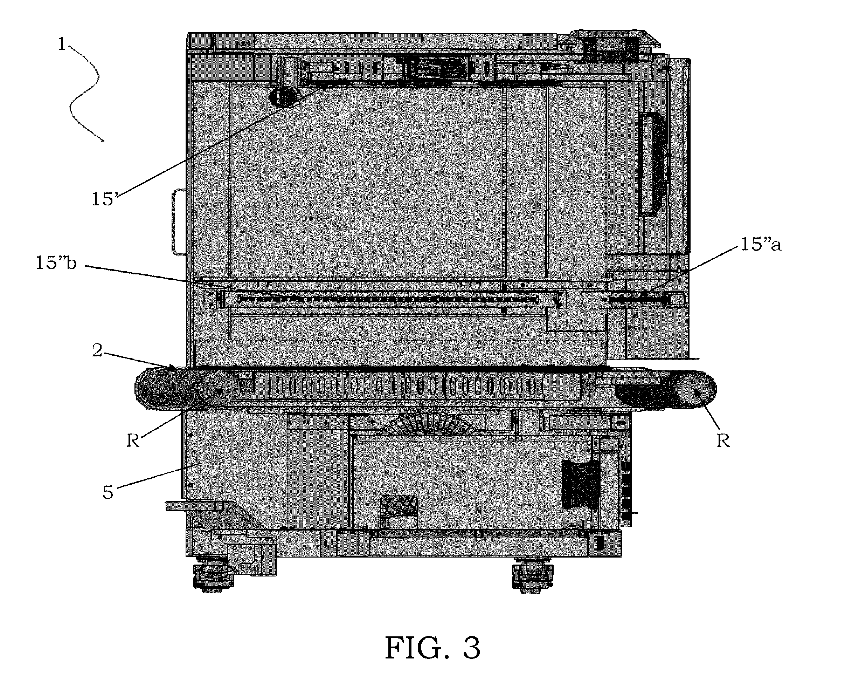

As illustrated in figures 1, 2, 3, and 5, the apparatus 1 of the present invention comprises a work-plane 2 (also called worktable) adapted to provide a support plane (indicated with reference a) for the material to be inspected. The work-plane 2 preferably has a quadrangular plan (even more preferably rectangular), even if it is not limited to a particular shape.

In general, the term work-plane 2, as known in the field, indicates the structure that supports the sheet of material to be cut, said plane being preferably equipped with at least two opposite sides of greater extension 2a and at least two opposite sides of smaller extension 2b (even more preferably rectangular or at least defining a rectangular work surface), and having a certain thickness, the term side thus indicating a side edge portion of the work-plane. Obviously, though the rectangular shape is the preferred one, other shapes, in which two major opposite sides and two minor opposite sides (for instance trapezoidal, or even with more than four sides) are present, are not excluded. Square shapes are not excluded either, having in any case two pairs of opposite sides, wherein the sides of the first pair of opposite sides are adjacent to the sides of the second pair of opposite sides.

In use, the operator stands on one side of the work-plane 2 free from encumbrances, for instance one of the sides of greater extension.

In case of a rectangular-shaped work-plane 2, as shown in the figures, the Y direction (transversal direction of the work-plane 2) is parallel to its minor sides, whereas the X direction (longitudinal direction of the work-plane 2) is parallel to its major sides.

The apparatus 1 is equipped with a base 5, for instance a box-shaped one, which constitutes the support for the work-plane 2 and possibly encloses mechanical and electronic elements that are auxiliary to the apparatus 1.

As illustrated in the figures, the apparatus 1 further comprises a lighting system 15 to illuminate the work-plane 2.

In a preferred embodiment of the present invention, the lighting system 15 comprises at least one first set of light sources (identified with reference number 15' and also called "upper lights 15‴ for the sake of simplicity), which are arranged and configured to illuminate the work-plane 2 from above, i.e. from an elevated position with respect to said work-plane 2, and a second set of light sources (identified with reference number 15" and also called "grazing lights 15ʺʺ for the sake of simplicity), which are arranged and configured to emit grazing light to the work-plane 2, i.e. with grazing incidence.

As for the upper lights 15', as it will also be illustrated hereinafter, they are arranged on a support above the work-plane 2 (for instance so as to lie on a plane above said work-plane 2 and possibly parallel thereto), and thus are configurated to illuminate the work-plane 2 from an elevated position with respect thereto, according to a first incidence angle with said work-plane 2, preferably, but not limitedly, of 90° (for instance an angle ranging between 70° and 110°, such as to ensure a homogeneous lighting of the work-plane from above).

Furthermore, the term "grazing lights 15"" is herein used, as known in the field, to indicate a set of light sources emitting incidence beams with a small angle with respect to the work-plane 2, much smaller with respect to the incidence angle of the upper lights 15', for instance an angle ranging between 0° (parallel light) and 30°, without however limiting to a particular angle value. A negative angle value, for instance ranging between -30° and 0°, also falls within the definition of grazing light according to the present invention; importantly, the incidence angle is such as to ensure the desired grazing. Said grazing lights 15" are arranged at a reduced height from the plane, for instance at few centimeters from said work-plane 2, whereas the upper lights 15' are arranged at a much greater height, even more than one meter.

According to the present invention, the grazing lights 15" are a set of lights that includes a first plurality of light sources (indicated with reference number 15"a) arranged at one of the two opposite sides of greater extension 2a, in particular at the side opposite the one in which the operator works, said lights being also indicated as horizontal lights or frontal lights. Suitably, there is also a second plurality of light sources (indicated with reference number 15"b) arranged at at least one of the two opposite sides of smaller extension 2b, preferably (but not necessarily) at both said minor sides, said lights being also indicated as side lights.

All of this is very beneficial since some types of defects can only be detected through lights arranged sideways, i.e. on the minor sides of the work-plane, whereas other types of defects (i.e. defects that are oriented differently) are only detectable with lights arranged on the side of greater extension, i.e. in general on the side opposite the one where the operator is present. Therefore, having two different kind of grazing lights, in addition to the upper lights, is very advantageous and helps to detect all kind of defects.

In the case of a quadrangular plan, the first plurality of light sources 15"a is arranged at the side opposite the one where the operator is present and the second set of light sources 15"b is arranged at at least one of the sides adjacent to said side opposite the operator (side lights).

The second plurality of light sources 15"b is focused to illuminate far away, for instance up to 1.5 m, and may comprise light sources arranged on various substantially parallel rows, and thus at different heights to illuminate far away while maintaining a suitable grazing angle. In an embodiment, light sources arranged on a row are configured to generate a light beam having an incidence angle with the work-plane 2 that is different from that of light sources arranged on another row.

In general, each light source may be set with an its own specific intensity and can be oriented so as to have an its own specific incidence angle. Obviously, the invention is not limited to a particular arrangement and combination of grazing angles and many other configurations are possible.

According to an embodiment, it is possible to adjust the relative intensity (and/or possibly the colour temperature) between the first plurality of grazing light sources 15"a and the second plurality of grazing light sources 15"b: for instance, to identify the "vertical" defects (with reference to plane 2), it may be appropriate to set the intensity of the second plurality of light sources 15"b (i.e. the side lights) as greater than that of the first plurality of light sources 15"a (i.e. the frontal lights), whereas for the "horizontal" defects the opposite applies, taking into account that the effects of said different light sources, at equal intensity, cancel each other out. Obviously other parameters of the light sources can also be adjusted, such as for instance the colour temperature.

It is therefore possible to not only dim the grazing lights 15" with respect to the upper lights 15' according to different values, but also to dim the different grazing lights relative to each other, as above illustrated, with the great advantage of easily detecting any type of defect. Obviously, it is also possible to envisage a case in which some light sources are totally turned off and other ones are turned on.

In other words, the apparatus may be configured to allow adjusting (automatically based on a selected mode or even manually by the operator) at least the relative intensity and/or the relative colour temperature between said pluralities of grazing lights, more generally to allow a relative adjustment between the first plurality of light sources and the second plurality of light sources. Therefore, this relative adjustment of the grazing lights may be performed by regulating different parameters (such as the intensity and or colour temperature), but the invention is not limited to this parameters.

Alternatively or in addition, the apparatus is configured to allow a relative adjustment of the first set of light sources and the second set of light sources. For example, the control unit may be configured to allow the selective activation of one of the first set of light sources or the second set of light sources (this regulation may be performed also manually). Moreover, for example, the control unit may be configured to adjust the relative intensity between the first set of light sources and the second set of light sources, and thus to dim said sets of light sources according to different values (this regulation may be performed also manually).

All this leads to a very versatile apparatus, improving the detection of defects.

The above mentioned relative adjustments may be performed automatically or manually, and they may be performed under the control of the control unit C.

In an embodiment of the present invention, the grazing lights 15" are covered by a cover element and a heat sink is present to prevent them from overheating.

In a preferred embodiment, the lighting system 15 comprises a plurality of LEDs, whose emission properties are controllable, even though the lights of the apparatus 1 are not limited to a particular type.

The memory unit MEM includes a plurality of operating instructions, each operating instruction corresponding to a lighting mode of the lighting system 15. For instance, the various operating instructions may relate to particular intensities and/or colour temperatures of the light sources of the lighting system 15, also providing for relative different intensities between the upper lights 15' and the grazing lights 15", for instance selectable based on the features of the material to be inspected, as it will be detailed hereinafter.

According to the present invention, the apparatus 1 comprises suitable means configured to allow selecting a lighting mode among the above-mentioned stored lighting modes based on the needs, so that the control unit C is able to automatically control the lighting system 15 based on said selection.

In this way, the operator is able to choose the preferred lighting mode by simply choosing among the various stored modes, for instance through a panel or any other selection means (that can be considered as part of the control unit C) of the apparatus 1.

Obviously, in an embodiment, in addition to what has been seen above, a manual selection of the lighting mode by the operator is also possible, operator who can turn on/turn off/dim the lights of the lighting system 15 at will.

In an exemplifying embodiment, the memory unit MEM comprises a plurality of previously stored instructions for a respective plurality of leather items (for instance for leather items of different colours or in general of different type), each instruction corresponding to a specific lighting mode of the lighting system 15 that is adapted to the related leather and is selectable through the control unit C, so that for each leather arranged on the work-plane it is possible to select the most suitable light configuration, the control unit C automatically setting all parameters.

For instance, in a first lighting mode, the control unit C is configured to set a first intensity and/or colour temperature of the lighting system 15, and, in at least one second lighting mode, the control unit C is configured to set a second intensity and/or colour temperature of the lighting system 15 that is different from the first intensity and/or colour temperature.

In another example, additionally or alternatively, the control unit C is configured to allow the selective activation of one of the first set of light sources 15' (i.e. the upper lights) and the second set of light sources 15" (i.e. the grazing lights), as well as it may be configured to adjust the relative intensity of said first set of light sources 15' and said second set of light sources 15", for instance defining a relative intensity percentage between said two different light sources. Indeed, there may be situations in which the grazing lights 15" are not necessary and thus they can be disabled, or opposite situations in which the upper lights 15' are not necessary. The possibility to adjust the relative intensity between the upper lights 15' and the grazing lights 15" is also very useful: for instance, if one wishes to identify a very small defect, the grazing lights 15" will be predominant with respect to the upper lights 15', whereas in other cases the upper lights 15' will be predominant, and the operator is able to easily choose the most suitable lighting mode.

As illustrated in the figures, the lighting system 15 is arranged on a suitable support 9 which, in an example, has an open-box shape at the side facing towards the operator, even if any suitable shape is comprised in the scope of the present invention. In the embodiment illustrated in figures 1 to 5, the upper lights 15' are arranged on the upper side of the support 9, whereas the grazing lights 15" are arranged on the side flanks thereof and on the central vertical portion.

As previously seen, as for the grazing lights 15", they are arranged at least along a major side and/or along at least one of the two opposite minor sides of the work-plane 2.

In an embodiment of the present invention, the grazing lights 15" comprise a plurality of light sources arranged side by side and a plurality of respective lenses configured to generate a light beam with a very reduced opening angle (in the example less than 45°, preferably ranging between 5° and 25°). In general, light sources with a very small light beam aperture (less than 45°) or even possibly equipped with additional focusing lenses are used. This allows the light beam emitted to be very narrow, wherein the various light sources placed side by side ensure homogeneous lighting of the work-plane 2, and an optimal maximum lighting distance is also ensured so that, as a whole, the grazing lights, arranged side-by-side, substantially cover the entire work-plane 2. In general, the lighting system 15 is configured so that the light is emitted homogeneously by a distance in a range of 1 to 2 meters, preferably 1 and a half meters. In other words, the emission shape of the lenses associated with the grazing lights 15" is such that the light is emitted with a reduced opening angle and up to a distance of about one and a half meters, wherein the long side of the work-plane 2 is of about three meters and the short one is of about one and a half meters. As a result, the set of the plurality of side-by-side light sources (in particular LEDs) substantially covers the entire work-plane 2 and allows excellent visibility.

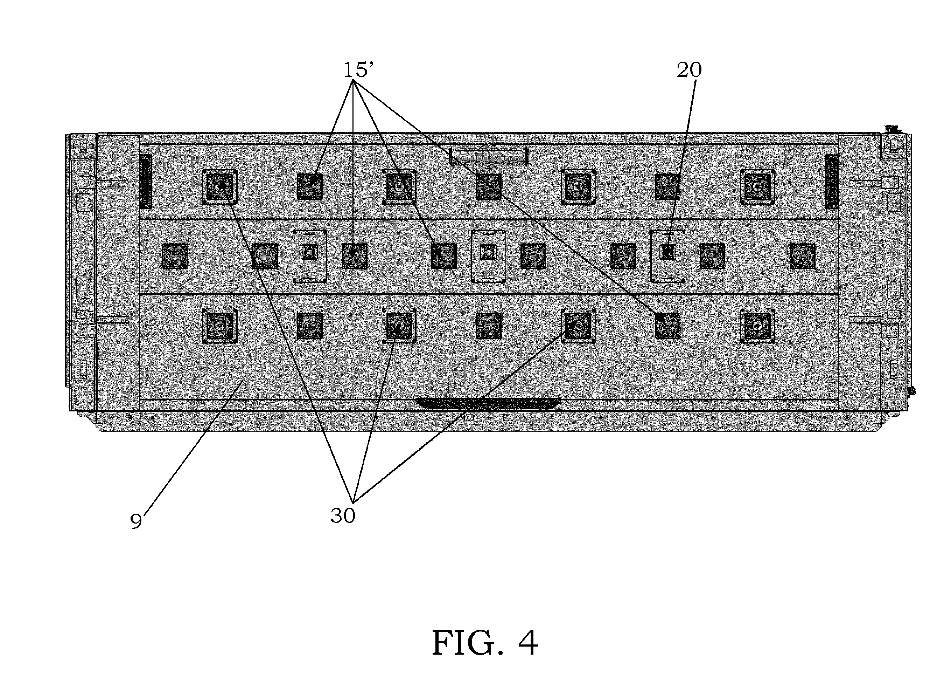

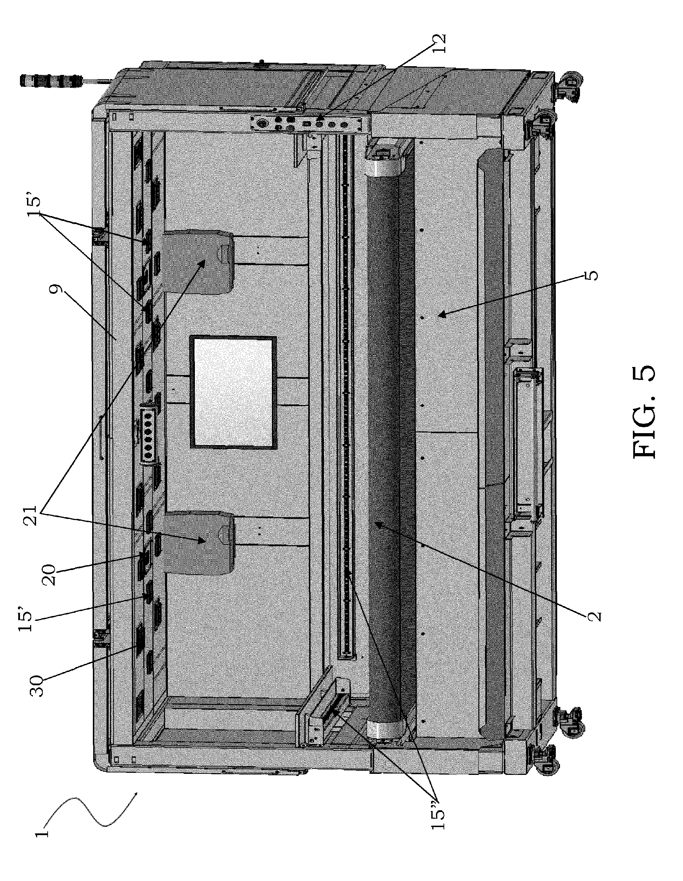

As previously mentioned, in a preferred application illustrated in figures 1 to 5, the apparatus 1 is an inspection machine that comprises at least one image detector (preferably a plurality of image detectors indicated in figures 4 and 5 with reference number 30) adapted to acquire images of a fabric (in particular leather) on the work-plane 2, wherein the control unit C is configured to process the images acquired by said image detectors 30 and to generate a digital copy of the inspected fabric (and thus substantially to digitize the leather to be analysed).

In this embodiment, the apparatus 1 possibly also comprises a signaling element 31 adapted to be used by the operator to indicate the defects on the leather surface. For instance, the signaling element 31 may be in the shape of a pen and may be equipped with a lighting element that can be detected by the image detectors 30, the coordinates of the movement of said lighting element being calculated through the control unit C, so as to accurately identify the position of the defects indicated by the operator and to store said information. Furthermore, instead of the lighting element a radio system, Bluetooth, Wi-Fi, etc., able to deliver information to the control unit C may be present.

The control unit C is then configured to correlate the defects on the fabric indicated by the signaling element 31 with the acquired image of the leather, with possible generation of a report indicating at least the shape and position of the defects on said fabric.

Furthermore, the control unit C may be configured to recognize the position, shape and/or extent of the defect of the surface of the leather based on the coordinates of the movement of the lighting element.

The control unit C may be operatively connected with a memory unit (for instance, but not necessarily, the above memory unit MEM) adapted to contain at least the digitized image of the inspected leather and the generated report indicating the defects of the leather. For instance, the memory unit may be a cloud unit which a user may access remotely through a specific application and/or a specific address.

Additionally or alternatively, the signaling element 31 may not be present, and the defects may be indicated with chalks (or any other suitable means) directly on the material to be inspected, afterwards images of the fabric are acquired, said images being processed by the control unit C.

Furthermore, in an alternative embodiment of the present invention, the apparatus 1 is able to acquire images of the fabric and the control unit C is configured to automatically detect, based on the acquired images, the presence and position of possible defects, for instance by following certain procedures based on machine learning, for instance exploiting neural networks.

Furthermore, as known in the field, the control unit C is configured to define a plurality of cutting areas on the digitized image (also called quality areas), wherein the type, number, and position of said cutting areas are defined and optimized based on the information acquired by the control unit C during the leather inspection. In other words, the quality areas are automatically defined on the images obtained based on the defects identified by the operator.

It is also noted that, in this embodiment, the control unit C may also be subdivided into two separated processing units, one for the lighting management and one for the defect management, but obviously the present invention is not limited thereto, and many other embodiments are possible, for instance it is possible to provide for a single computerized unit.

In an embodiment, the work-plane 2 may possibly be tilted, if necessary, by suitable lifting means. Moreover, it is noted that, in this embodiment wherein the apparatus 1 is an inspection machine, the work-plane 2 is not fixed, but it is substantially a conveyor belt moved by rollers R, thus allowing moving the fabric arranged thereon (in particular in the Y direction), said fabric being suitably digitized while sliding.

Furthermore, in an embodiment of the present invention, the apparatus 1 comprises at least one first projector 20 and one second projector 21 to project elements onto the work-plane 2 (for instance to project the defects identified by the operator and subsequently stored, or other useful information), wherein the control unit C is operatively connected to the first projector 20 and to the second projector 21 and comprises operating means configured to allow the selective activation of one of the first projector 20 or the second projector 21. Suitably, in this embodiment, the control unit C is configured to control the lighting system 15 based on the activated projector, in particular it is configured to automatically switch the lighting system 15 between a first projection mode when the first projector 20 is selected, and a second projection mode when the second projector 21 is selected.

In particular, the first projector 20 comprises at least one laser source and the second projector 21 is a video projector. Still more particularly, the control unit C is configured to modify the intensity of the light emitted by the lighting system 15 while switching between the first projection mode and the second projection mode, and vice versa. In this way, it is possible to adapt the lighting system 15 to the used projector, wherein in certain applications it is more convenient to use the first laser projector 20, whereas in other applications it is more convenient to use the second video projector 21.

As mentioned above, the first projector 20 and the second projector 21 are adapted to project the profile of the identified defect onto the leather, defect which is then directly viewed on the inspected material, thus facilitating the inspection task. The operator thus has the chance to switch between the first laser projector 20 and the second video projector 21 depending on the needs, and the lighting will be adjusted accordingly by the control unit C as above described, so as to always ensure an optimal vision of the defect projected onto the material. Furthermore, once the above different quality areas have been defined, one of the above projectors, preferably the second video projector 21 (which is able to also project color images and/or other information), may be adapted to project said quality areas onto the leather, so as to have a direct vision thereof on the material.

In an embodiment of the present invention, the apparatus 1, through the image detectors 30 (or - less preferably - through at least one suitable camera/video camera), is configured to take a photo (o in some cases to acquire a video) of the inspected material, thus realizing a digital image of the leather as illustrated above, for instance to be stored in the memory of the machine. It is advisable that, in the short amount of time necessary to acquire the aforementioned image, the parameters of the lighting system 15 and the image detectors 30 be correctly set so as to allow the correct acquisition and thus to ensure the correct operation of the detectors themselves.

Advantageously, the control unit C is configured to allow the switch of the lighting system 15 at least between a first operating mode, which involves a lighting adapted to allow an optimal fabric inspection by the operator (and wherein no picture of the leather is taken), and a second operating mode, which involves a lighting adapted to allow the acquisition of images and/or videos by means of the above image detectors 30. In particular, by means of a suitable control, the user commands the control unit C to take a photo of the leather (o more generally to take photos/videos of the leather on the work-plane 2) and the control unit C is configured to adjust the lighting system 15 accordingly (in a mode indicated in the jargon as "technical light"), for instance lowering the light intensity to avoid the saturation of the detectors. The parameters of the detectors are stored in the memory unit MEM of the control unit C and are optimized (and fixed) based on the lighting chosen for the second operating mode where the photo is taken, said parameters being precisely applied to the image detectors 30 and no longer modified in the switch between the two different operating modes, since it is the very lighting system 15 that is automatically adapted accordingly.

As previously mentioned, this analogously applies also when one wishes to make a video, in particular with the conveyor belt in movement in order to scan the tachymeter band on the edge of that conveyor belt so as to determine the exact positioning of the belt during the travel and possibly to apply a correction factor. Even in this case, under the operator's command, the correct parameters of the lighting system 15 are set automatically by the control unit C in the second operating mode, said parameters corresponding to the parameters set for the acquisition of the photo (even if it is possible to envisage specific parameters for the acquisition of the video of the tachymeter band).

In an embodiment of the present invention, the second operating mode is automatically activated when a suitable command (for instance a pedal) which moves the work-plane 2 is activated, with the acquisition of images and of the above video. Moreover, it is noted that, in an embodiment, the video camera dedicated to the acquisition of the video is one of the image detectors 30, which is simultaneously used to make said video.

Moreover, it is noted that in case of defect inspection machines, the work-plane 2 may be tiltable or liftable based on the user's needs.

The management of the apparatus 1 by the user may occur for instance by means of a control panel 12, equipped with screen and buttons, operatively connected with the control unit C (possibly, as above mentioned, said panel may also be considered as part of the control unit C, for instance an end element thereof, with which the user can enter some inputs). Possibly the apparatus 1 may also be provided with a control monitor 35 and control video cameras, said components being supported by the support 9.

In an advantageous embodiment of the present invention, the control unit C is configured to subdivide the work-plane (and more particularly the material to be inspected) in different work areas Wa, and it is envisaged that the operator works from time to time in a single work area, which is visualized through one of the projectors, in particular through the laser projector 21. It is noted that, in this embodiment, it is not necessary to have two types of different projectors, but just one of them is enough, for instance (but not limitedly) one or more laser projectors.

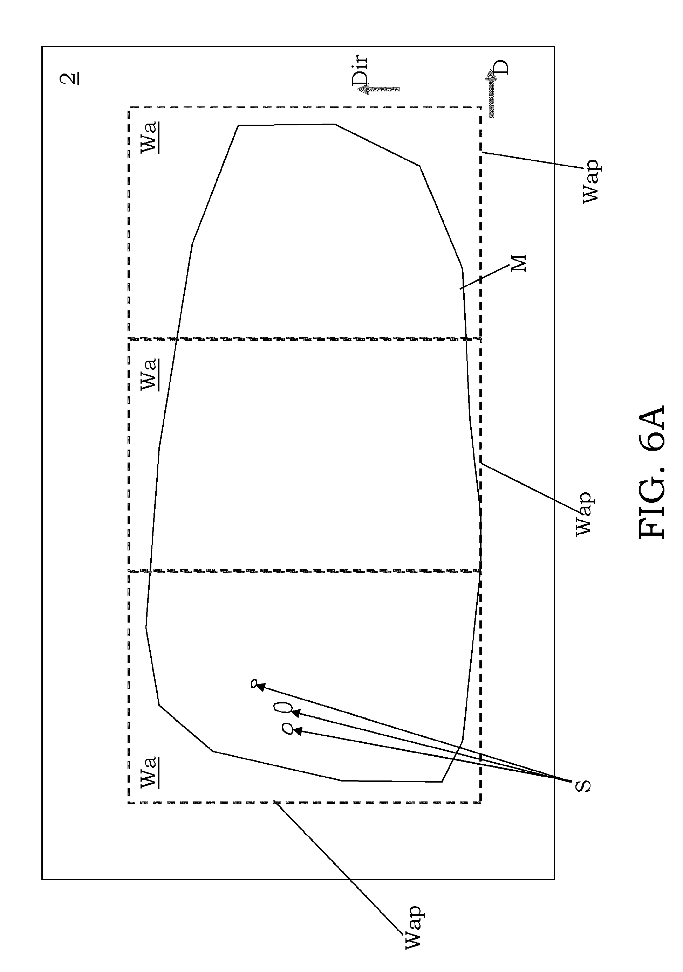

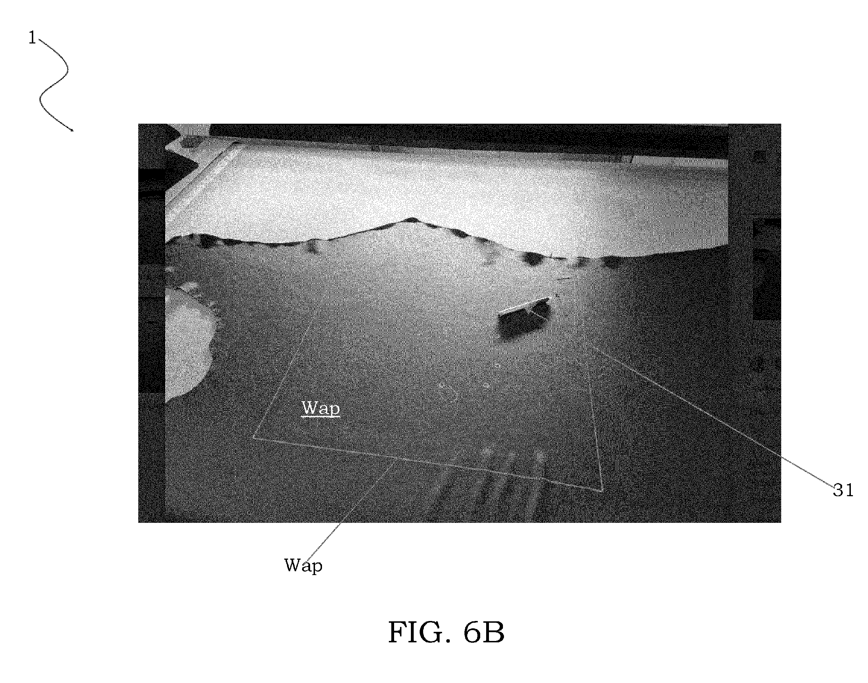

In particular, the control unit C is suitably configured (by executing steps of a suitable algorithm) to define a plurality of work areas (identified with a same reference Wa) based on which the material M arranged on the work-plane 2 is virtually subdivided. For instance, once the material M has been placed on the work-plane 2 and once an image has been acquired (for instance through the image detectors 30, or even - less preferably - through dedicated detectors), said material M is virtually and automatically subdivided into a plurality of work areas (for instance three, even if any number falls within the scope of the present invention), as shown in the schematic example of figure 6A, said work areas being then projected onto the material, in particular each of them singularly, as indicated in the example of figure 6B. Said areas may be equal to each other or even different, the separation being performed by the control unit C in the most appropriate way.

The projector 21 is thus configured to project onto the work-plane 2, under the command of the control unit C, profiles (indicated with reference Wap) corresponding to the above work areas Wa, each profile Wap being adapted to allow identifying a single work area with respect to the other work areas.

As above mentioned, in an embodiment, the projector 21 is configured to project the profiles Wap corresponding to the single work areas Wa separately from each other, i.e. they are not projected all together but there is a selection of the profile to be projected; to this end, the apparatus 1, in particular the control unit C, is adapted to allow the switch of the projection of a profile to the projection of a different profile (for instance to a profile corresponding to an adjacent work area); this may occur automatically or even through manual selection by the user who chooses which profile to project, or even based on a movement of the material along a travel direction. Thus, it is noted that single profiles are preferably projected.

For instance, each profile is projected at a certain work phase, for instance based on the progression of the inspection by the operator. In an example, the operator selects the work area, and the relative profile is projected and, once the inspection has ended, the operation selects another work area and the previously selected work area is indicated as already inspected, so as not to inspect areas that have already been inspected. Clearly, the selection of the work areas may occur also automatically, based on a preset work sequence.

In an embodiment, if desired, all profiles can also be projected together.

Suitably, in an embodiment, the control unit C is configured to control the lighting system 15 based on the specific projected Wap profile. For instance, the control unit C may be programmed to control the lighting system 15 so as to turn off, or keep at a reduced intensity, light sources of the lighting system 15 corresponding to non-projected work areas (for instance close to the non-selected work area, by means of a correspondence defined by the control unit C), and thus to properly illuminate just the work area Wa of interest.

In an embodiment of the present invention, the projected profiles Wap are square- or rectangular-shaped, even though any suitable shape falls within the scope of the present invention.

For instance, once taken the image of the material through the image detectors 30, said image is processed and the entire material M is inscribed in a rectangle (or any other suitable shape), and afterwards the control unit C proceeds with the subdivision into the various work areas Wa.

Furthermore, in an embodiment, the work-plane 2 is equipped with means (not illustrated, such as for instance the conveyor belt previously mentioned in connection with the technical light), adapted to allow moving the material along a travel direction (indicated with the arrow Dir, for instance parallel to the Y direction), said means being actuated through inputs by the operator (which can act on suitable means such as for instance a pedal).

Suitably, the central unit C is configured to define in advance the size of the base of the profile Wap, based on the shape of the material (for instance, inscribing the material in a single theoretical rectangle or square and afterwards dividing, as above described), in particular based on the extension of the material M in a direction that is substantially orthogonal to the travel direction Dir (extension of the side of the rectangle in which the material is inscribed), and to adjust the size of the height of said profile Wap projected depending on the travel of the material M along the travel direction Dir (in other words, as the material travels, the side corresponding to the profile, in particular the side parallel to the travel direction Dir, is also adjusted).

Furthermore, there may be cases in which there is not a "vertical" subdivision into various work areas (i.e. along the minor side of the worktable), but possibly only a "horizontal" subdivision (i.e. only a line parallel to the major side of the table), which is updated as the belt travels. In any case, the profile projected to delimit the work area could be a simple horizontal line placed at a certain distance from the operator, whose position is defined based on the movement of the belt (the two vertical lines are not necessary since one is working on the entire width of the work-plane and the lower line is not necessary since the area is indeed bounded by the end of the work-plane near the operator (long side near the operator).

Therefore, it is noted that the term "profile" does not necessarily indicate a closed shape, but also a simple line falls within the meaning of this term.

In the case of a fabric inspection apparatus, the projector 21 comprises at least one laser projector, said laser projector being adapted to project, in addition to the profile Wap, also the defects (indicated with reference S) of the material identified by the operator within the work area Wa through the signaling element 31. In this way, only the defects marked in the specific selected work area are projected, thus avoiding confusion for the operator, who no longer has doubts about which area of the material has been inspected and which has not. Therefore, the projector may be configured to project various elements, among which profiles and defects within the profiles.

Obviously, this solution is independent of the particular lighting configuration and may be implemented in a common apparatus that simply comprises any lighting system and any projector. As a result, the present invention also relates to an apparatus 1 which is simply equipped with the projection functionality described above, regardless of the configuration of the lighting system 15 and its control.

Furthermore, in an embodiment, the work-plane 2 is configured to be lifted/lowered/tilted if necessary. The adjustment of the height/tilt may be stored and selected based on the operator/material.

In this embodiment, the apparatus 1 may comprise a fixed lower portion (for instance comprising the base) and a movable upper portion, comprising at least the work-plane 2, the lighting and image detection system, in particular said upper portion being liftable/lowerable with respect to the base while keeping the distances between lights/video cameras and work-plane equal. The same also applies for the tilt (inclination) of the work-plane: the above upper portion is tiltable in its entirety, therefore not only the work-plane, but also the lights and video cameras. These movements may be controlled through the control unit C.

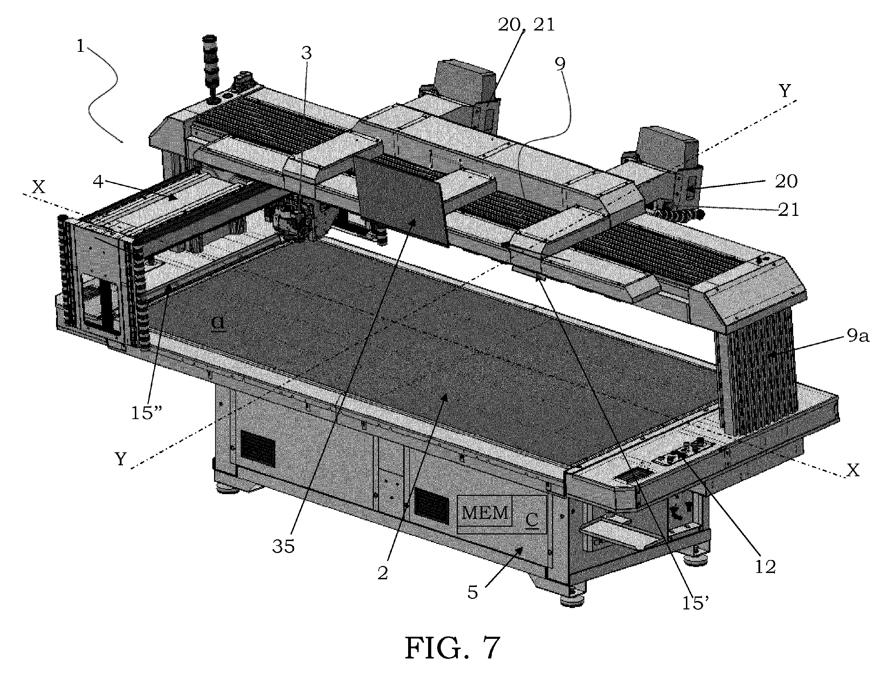

Finally, as previously mentioned, in an alternative and less preferred embodiment, illustrated in figure 7, the apparatus 1 may be a cutting machine comprising at least one cutting unit or head 3 adapted to cut the material, in particular leather, arranged on the work-plane 2. In this embodiment, the apparatus 1 may be a so-called cutting bench and may comprise the work-plane 2 adapted to provide a support plane or work surface for the sheet of material to cut. The work-plane 2 preferably has a quadrangular plan (still more preferably substantially rectangular) and the cutting unit 3, carried by at least one arm or beam 4, acts thereon. The work-plane 2 preferably is a fixed plane whereon the material to be cut is placed and is free from encumbrances along at least two parallel sides of greater extension. In this case, the X direction is also called sliding direction of the arm 4, which thus, in an embodiment, slides along the major sides of the work-plane 2. For the purposes of the present invention, however, nothing prevents the arm 4 from sliding along the minor sides of the work-plane 2 or in any other suitable way, and thus the Y direction from being the sliding direction, the present invention not being limited by a particular sliding direction of the arm 4.

Obviously, all of the aspects discussed above in connection to the lighting system 15 and the control thereof, also apply to the above described cutting machine, with the necessary precautions, and this is the reason why the same reference numbers are used.

In this embodiment, the support 9 may have an architrave shape supported by uprights 9a and the upper lights 15' and the projectors 20 and 21 are placed thereon; the grazing lights 15" instead are placed at the work-plane 2. Suitably, the control of the lighting system 15 takes place as described above in relation to the inspection machine, i.e. the most appropriate lighting mode is set depending on the material and/or the operation to be carried out.

Furthermore, it is noted that the teachings of the present description obviously also apply to a cutting machine with the conveyor belt and closed cutting area.

Clearly, the present invention also provides a general system derived by the combination of the above-described cutting machine and fabric inspection machine, for instance arranged in sequence, with any suitable mechanical structure.

In conclusion, the present invention thus allows to brilliantly overcome the technical problem, by providing the above apparatus and solving all of the drawbacks of the prior art.

Advantageously, it is possible to have an optimized control of the lighting without modifying the mechanical and electronic structure of the apparatus in any way, as the components used are substantially unchanged and only a simple command is added to the control unit, which is thus able to automatically perform the automatic adjustment of the lighting system based on the needs indicated by the operator.

The possibility of adjusting the different grazing lights with each other is very advantageous because it allows identifying any defect with any orientation in the plane, by simply regulating these grazing lights as desired.

Finally, the possibility of dividing the material into various work areas is very advantageous, as this avoids confusion by the operator regarding which part of the material has already been inspected and which has not; it is therefore a simple but very effective solution to solve this problem and facilitate the inspection.

## Claims

1. An apparatus (1) for the inspection and/or processing of a material, in particular leather, comprising:
- a work-plane (2) adapted to provide a support surface for the material, said work-plane (2) having at least one first pair of opposite sides (2a) and at least one second pair of opposite sides (2b);
- a control unit (C) adapted to manage the apparatus (1); and
- a lighting system (15) comprising at least:
- a first set of light sources (15') which are arranged and configured to illuminate the work-plane (2) from an elevated position with respect to said work-plane (2), according to a first incidence angle with said work-plane (2); and
- a second set of light sources (15") which are arranged and configured to emit grazing light to the work-plane (2), according to a second incidence angle with said work plane (2), said second incidence angle being smaller than the first incidence angle,
**characterized in that** the second set of light sources (15") comprises a first plurality of light sources (15"a) arranged at at least one of the two opposite sides (2a) of the first pair of opposite sides, and a second plurality of light sources (15"b) arranged at at least one of the two opposite sides (2b) of the second pair of opposite sides.

2. The apparatus (1) according to claim 1, **characterized in that** it is configured to allow a relative adjustment between the first plurality of light sources (15"a) and the second plurality of light sources (15"b), for example by adjusting the relative intensity and/or the colour temperature between said light sources.

3. The apparatus (1) according to claim 1 or 2, **characterized in that** it is configured to allow a relative adjustment of the first set of light sources (15') and the second set of light sources (15"), wherein, in said relative adjustment, said apparatus (1) is configured to allow the selective activation of one of the first set of light sources (15') or the second set of light sources (15"), and/or is configured to adjust the relative intensity between said first set of light sources (15') and said second set of light sources (15").

4. The apparatus (1) according to any one of the preceding claims, wherein the control unit (C) comprises a memory unit (MEM) including a plurality of operating instructions, each operating instruction corresponding to a lighting mode of said lighting system (15), and wherein said apparatus (1) further comprises means configured to allow the selection of a lighting mode among said stored lighting modes, said control unit (C) being configured to control the lighting system (15) based on said selection.

5. The apparatus (1) according to claim 4, wherein the memory unit (MEM) comprises a plurality of stored operating instructions for a respective plurality of materials, each instruction corresponding to a specific lighting mode of the lighting system (15), said specific lighting mode being adapted to the corresponding material and being selectable by means of the control unit (C).

6. The apparatus (1) according to claim 5, wherein, in a first lighting mode, the control unit (C) is configured to set a first intensity and/or color temperature of the lighting system (15), and wherein, in at least one second lighting mode, the control unit (C) is configured to set a second intensity and/or color temperature of the lighting system (15) which is different from the first intensity and/or color temperature.

7. The apparatus (1) according to any one of the preceding claims, wherein the second set of light sources (15") comprises, at the respective side/s of the work-plane (2), a plurality of light sources arranged side by side and a plurality of respective lenses configured to generate a light beam having an opening angle ranging between 5° and 25°.

8. The apparatus (1) according to any one of the preceding claims, wherein the second set of light sources (15") comprises, at the respective side/s of the work-plane (2), a plurality of light sources configured to generate a light beam having an incidence angle with the work-plane (2) ranging between 0 and 30°.

9. The apparatus (1) according to any one of the preceding claims, wherein the second set of light sources (15") comprises a plurality of light sources arranged on at least two parallel rows, and wherein, optionally, light sources arranged on a row are configured to generate a light beam having an incidence angle with the work-plane (2) that is different with respect of the incidence angle of light sources arranged on another row.

10. The apparatus (1) according to any one of the preceding claims, wherein the sides of the first pair of opposite sides (2a) are sides of greater extension, and the sides of the second pair of opposite sides (2b) are sides of smaller extension, wherein the first plurality of light sources (15"a) is arranged at at least one of the two opposite sides (2a) of greater extension, and wherein the second plurality of light sources (15"b) is arranged at at least one of the two opposite sides (2b) of smaller extension, said work-plane (2) preferably having a rectangular shape.

11. The apparatus (1) according to any one of the preceding claims, comprising at least one image detector (30) adapted to acquire images and/or videos of the material on the work-plane (2), wherein the control unit (C) is configured to allow the switch of the lighting system (15) at least between a first operating mode, which is adapted to allow the inspection of the material by the operator, and a second operating mode, which is adapted to allow the acquisition of images and/or videos by means of said detector image (30) and which corresponds to a different setting of the lighting system (15), wherein the optimal operating parameters of said at least one image detector (30) are optimized in relation to the setting of the lighting system (15) in said second operating mode, and wherein, in the switch between the first operating mode and the second operating mode, said parameters of the image detector (30) are not modified.

12. The apparatus (1) according to any one of the preceding claims, further comprising at least one projector (20, 21) adapted to project elements onto the work-plane (2).

13. The apparatus (1) according to claim 12, wherein the control unit (C) is configured to define a plurality of work areas (Wa) on the basis of which the material (M) arranged on the work-plane (2) is virtually subdivided, and wherein the projector (20, 21) is configured to project onto the work-plane (2) profiles (Wap) corresponding to said work areas (Wa), each of said profiles (Wap) being adapted to identify a single work area with respect to the other work areas, wherein the projector (20, 21) is configured to project the profiles (Wap) corresponding to the individual working areas (Wa) separately from each other, wherein the control unit (C) is adapted to allow the selection of a specific profile and therefore the switch from the projection of a profile to the projection of a different profile, and wherein said control unit (C) is further adapted to control the lighting system (15) in based on the specific projected profile (Wap).

14. The apparatus (1) according to claim 13, wherein the control unit (C) is further configured to control the lighting system (15) so as to turn off, or to keep at a reduced intensity, light sources of the lighting system (15) which correspond to non-projected work areas.

15. The apparatus (1) according to any one of claims 13 or 14, wherein:
- the projected profiles (Wap) have a square or rectangular shape,
- the work-plane (2) is equipped with movement means configured to allow the movement of the material along a travel direction (Dir),
- the apparatus (1) comprises means for allowing the actuation of the movement means based on a user input, and
- the control unit (C) is configured to define the size of a side of said square or rectangular shape of the projected profile (Wap), said side extending along a direction (D) opposite to the travel direction (Dir), based on the extension of the material (M) along said direction (D), and to adjust the size of a side of said square or rectangular shape of the projected profile (Wap), said side extending along the travel direction (Dir), according to the travel of the material (M) along said travel direction (Dir).

16. The apparatus (1) according to any one of the preceding claims, **characterized in that** it is an inspection machine comprising a plurality of image detectors (30) adapted to acquire images of the material on the work-plane (2), wherein the control unit (C) is configured to process the images acquired by said image detectors (30) and to generate a digital copy of the inspected material.

17. The apparatus (1) according to claim 13 and according to claim 16, wherein the projector (21) comprises at least one laser projector, said laser projector being adapted to project, in addition to the profile (Wap), also defects of the material identified by the operator, through a signaling element (31), within the corresponding work area (Wa).

## Patentansprüche

1. Vorrichtung (1) zur Inspektion und/oder Bearbeitung eines Materials, insbesondere Leder, umfassend:
• eine Arbeitsebene (2), die dazu ausgebildet ist, eine Auflagefläche für das Material bereitzustellen, wobei die Arbeitsebene (2) mindestens ein erstes Paar gegenüberliegender Seiten (2a) und mindestens ein zweites Paar gegenüberliegender Seiten (2b) aufweist;
• eine Steuereinheit (C), die dazu ausgebildet ist, die Vorrichtung (1) zu steuern; und
• ein Beleuchtungssystem (15), das mindestens umfasst:
• eine erste Gruppe von Lichtquellen (15'), die angeordnet und konfiguriert sind, um die Arbeitsebene (2) aus einer erhöhten Position in Bezug auf die genannte Arbeitsebene (2) unter einem ersten Einfallswinkel zur Arbeitsebene (2) zu beleuchten; und
• eine zweite Gruppe von Lichtquellen (15"), die angeordnet und konfiguriert sind, um Streiflicht auf die Arbeitsebene (2) unter einem zweiten Einfallswinkel zur genannten Arbeitsebene (2) abzugeben, wobei der zweite Einfallswinkel kleiner ist als der erste Einfallswinkel,
**dadurch gekennzeichnet, dass** die zweite Gruppe von Lichtquellen (15") eine erste Mehrzahl von Lichtquellen (15"a) umfasst, die an mindestens einer der beiden gegenüberliegenden Seiten (2a) des ersten Paars gegenüberliegender Seiten angeordnet ist, und eine zweite Mehrzahl von Lichtquellen (15"b), die an mindestens einer der beiden gegenüberliegenden Seiten (2b) des zweiten Paars gegenüberliegender Seiten angeordnet ist.

2. Vorrichtung (1) nach Anspruch 1,
**dadurch gekennzeichnet, dass**
sie derart ausgebildet ist, eine relative Einstellung zwischen der ersten Mehrzahl von Lichtquellen (15"a) und der zweiten Mehrzahl von Lichtquellen (15"b) zu ermöglichen, beispielsweise durch Einstellen der relativen Intensität und/oder der Farbtemperatur zwischen den genannten Lichtquellen.

3. Vorrichtung (1) nach Anspruch 1 oder 2,
**dadurch gekennzeichnet, dass**
sie derart ausgebildet ist, eine relative Einstellung der ersten Gruppe von Lichtquellen (15') und der zweiten Gruppe von Lichtquellen (15") zu ermöglichen, wobei die Vorrichtung (1) bei dieser relativen Einstellung derart konfiguriert ist, dass eine selektive Aktivierung der ersten Gruppe von Lichtquellen (15') oder der zweiten Gruppe von Lichtquellen (15") ermöglicht und/oder die relative Intensität zwischen der ersten Gruppe von Lichtquellen (15') und der zweiten Gruppe von Lichtquellen (15") einstellbar ist.

4. Vorrichtung (1) nach einem der vorhergehenden Ansprüche,
wobei
die Steuereinheit (C) eine Speichereinheit (MEM) umfasst, in der eine Mehrzahl von Betriebsanweisungen gespeichert ist, wobei jede Betriebsanweisung einem Beleuchtungsmodus des Beleuchtungssystems (15) entspricht, und wobei, die Vorrichtung (1) ferner Mittel umfasst, die dazu ausgebildet sind, die Auswahl eines Beleuchtungsmodus unter den gespeicherten Beleuchtungsmodi zu ermöglichen, wobei die Steuereinheit (C) dazu konfiguriert ist, das Beleuchtungssystem (15) auf Grundlage der getroffenen Auswahl zu steuern.

5. Vorrichtung (1) nach Anspruch 4,
wobei
die Speichereinheit (MEM) eine Mehrzahl gespeicherter Betriebsanweisungen für eine jeweilige Mehrzahl von Materialien umfasst, wobei jede Anweisung einem spezifischen Beleuchtungsmodus des Beleuchtungssystems (15) entspricht, welcher an das jeweilige Material angepasst ist und mittels der Steuereinheit (C) auswählbar ist.

6. Vorrichtung (1) nach Anspruch 5,
wobei
in einem ersten Beleuchtungsmodus, die Steuereinheit (C) dazu konfiguriert ist, eine erste Intensität und/oder Farbtemperatur des Beleuchtungssystems (15) einzustellen, und wobei in mindestens einem zweiten Beleuchtungsmodus, die Steuereinheit (C) dazu konfiguriert ist, eine zweite Intensität und/oder Farbtemperatur des Beleuchtungssystems (15) einzustellen, welche sich von der ersten Intensität und/oder Farbtemperatur unterscheidet.

7. Vorrichtung (1) nach einem der vorhergehenden Ansprüche,
wobei
die zweite Gruppe von Lichtquellen (15") an der/n jeweiligen Seite/n der Arbeitsebene (2) eine Mehrzahl nebeneinander angeordneter Lichtquellen umfasst sowie eine Mehrzahl entsprechender Linsen, die dazu konfiguriert sind, einen Lichtstrahl mit einem Öffnungswinkel im Bereich von 5° bis 25° zu erzeugen.

8. Vorrichtung (1) nach einem der vorhergehenden Ansprüche,
wobei
die zweite Gruppe von Lichtquellen (15") an der/n jeweiligen Seite/n der Arbeitsebene (2) eine Mehrzahl von Lichtquellen umfasst, die dazu konfiguriert sind, einen Lichtstrahl mit einem Einfallswinkel zur Arbeitsebene (2) im Bereich von 0 bis 30° zu erzeugen.

9. Vorrichtung (1) nach einem der vorhergehenden Ansprüche,
wobei
die zweite Gruppe von Lichtquellen (15") eine Mehrzahl von Lichtquellen umfasst, die in mindestens zwei parallelen Reihen angeordnet sind, und wobei optional Lichtquellen, die in einer Reihe angeordnet sind, dazu konfiguriert sind, einen Lichtstrahl mit einem Einfallswinkel zur Arbeitsebene (2) zu erzeugen, der sich von dem Einfallswinkel der auf einer anderen Reihe angeordneten Lichtquellen unterscheidet.

10. Vorrichtung (1) nach einem der vorhergehenden Ansprüche,
wobei
die Seiten des ersten Paars gegenüberliegender Seiten (2a) Seiten mit größerer Erstreckung sind und die Seiten des zweiten Paars gegenüberliegender Seiten (2b) Seiten mit geringerer Erstreckung sind, wobei die erste Mehrzahl von Lichtquellen (15"a) an mindestens einer der beiden gegenüberliegenden Seiten (2a) mit größerer Erstreckung angeordnet ist und die zweite Mehrzahl von Lichtquellen (15"b) an mindestens einer der beiden gegenüberliegenden Seiten (2b) mit geringerer Erstreckung angeordnet ist, wobei die Arbeitsebene (2) vorzugsweise eine rechteckige Form aufweist.

11. Vorrichtung (1) nach einem der vorhergehenden Ansprüche,
umfasst
mindestens einen Bilddetektor (30), der dazu ausgebildet ist, Bilder und/oder Videos des Materials auf der Arbeitsebene (2) zu erfassen, wobei die Steuereinheit (C) derart konfiguriert ist, ein Umschalten des Beleuchtungssystems (15) zumindest zwischen einem ersten Betriebsmodus zu ermöglichen, der dazu ausgebildet ist, die Inspektion des Materials durch den Bediener zu ermöglichen, und einem zweiten Betriebsmodus, der dazu ausgebildet ist, die Erfassung von Bildern und/oder Videos mittels des genannten Bilddetektors (30) zu ermöglichen und der einer unterschiedlichen Einstellung des Beleuchtungssystems (15) entspricht, wobei die optimalen Betriebsparameter des genannten mindestens einen Bilddetektors (30) in Bezug auf die Einstellung des Beleuchtungssystems (15) in dem zweiten Betriebsmodus optimiert sind und wobei beim Umschalten zwischen dem ersten Betriebsmodus und dem zweiten Betriebsmodus die genannten Parameter des Bilddetektors (30) nicht verändert werden.

12. Vorrichtung (1) nach einem der vorhergehenden Ansprüche,
umfasst
mindestens einen Projektor (20, 21) umfasst, der dazu ausgebildet ist, Elemente auf die Arbeitsebene (2) zu projizieren.

13. Vorrichtung (1) nach Anspruch 12,
wobei
die Steuereinheit (C) derart konfiguriert ist, dass sie eine Mehrzahl von Arbeitsbereichen (Wa) definiert, auf deren Grundlage das auf der Arbeitsebene (2) angeordnete Material (M) virtuell unterteilt wird, und dass der Projektor (20, 21) dazu ausgebildet ist, auf die Arbeitsebene (2) Profile (Wap) zu projizieren, die den genannten Arbeitsbereichen (Wa) entsprechen, wobei jedes der genannten Profile (Wap) dazu ausgebildet ist, einen einzelnen Arbeitsbereich gegenüber den anderen Arbeitsbereichen zu identifizieren, wobei der Projektor (20, 21) derart konfiguriert ist, dass er die den einzelnen Arbeitsbereichen (Wa) entsprechenden Profile (Wap) getrennt voneinander projiziert, wobei die Steuereinheit (C) dazu ausgebildet ist, die Auswahl eines bestimmten Profils und somit das Umschalten von der Projektion eines Profils auf die Projektion eines anderen Profils zu ermöglichen, und wobei die genannte Steuereinheit (C) ferner dazu ausgebildet ist, das Beleuchtungssystem (15) in Abhängigkeit vom jeweils projizierten Profil (Wap) zu steuern.

14. Vorrichtung (1) nach Anspruch 13,
wobei
die Steuereinheit (C) ferner dazu konfiguriert ist, das Beleuchtungssystem (15) derart zu steuern, dass Lichtquellen des Beleuchtungssystems (15), die nicht projizierten Arbeitsbereichen entsprechen, abgeschaltet oder mit verringerter Intensität betrieben werden.

15. Vorrichtung (1) nach einem der Ansprüche 13 oder 14,
wobei
• die projizierten Profile (Wap) eine quadratische oder rechteckige Form aufweisen,
• die Arbeitsebene (2) mit Bewegungsmittel versehen ist, die dazu konfiguriert sind, eine Bewegung des Materials entlang einer Vorschubrichtung (Dir) zu ermöglichen,
• die Vorrichtung (1) Mittel umfasst, die die Betätigung der Bewegungsmittel in Abhängigkeit von einer Benutzereingabe ermöglichen, und
• die Steuereinheit (C) derart konfiguriert ist, dass sie die Größe einer Seite der genannten quadratischen oder rechteckigen Form des projizierten Profils (Wap), wobei genannte Seite sich entlang einer Richtung (D) erstreckt, die der Vorschubrichtung (Dir) entgegengesetzt ist, in Abhängigkeit von der Erstreckung des Materials (M) entlang der genannten Richtung (D) definiert und die Größe einer Seite der genannten quadratischen oder rechteckigen Form des projizierten Profils (Wap), wobei genannte Seite sich entlang der Vorschubrichtung (Dir) erstreckt, entsprechend vom Vorschub des Materials (M) entlang der genannten Vorschubrichtung (Dir) anpasst.

16. Vorrichtung (1) nach einem der vorhergehenden Ansprüche,
**dadurch gekennzeichnet, dass**
es sich um eine Inspektionsmaschine handelt, die eine Mehrzahl von Bilddetektoren (30) umfasst, welche dazu ausgebildet sind, Bilder des Materials auf der Arbeitsebene (2) zu erfassen, wobei die Steuereinheit (C) dazu konfiguriert ist, die von den genannten Bilddetektoren (30) erfassten Bilder zu verarbeiten und eine digitale Kopie des inspizierten Materials zu erzeugen.

17. Vorrichtung (1) nach Anspruch 13 und Anspruch 16,
wobei
der Projektor (21) mindestens einen Laserprojektor umfasst, wobei der genannte Laserprojektor dazu ausgebildet ist, zusätzlich zu dem Profil (Wap) auch vom Bediener mittels eines Signalelements (31) identifizierte Materialfehler innerhalb des entsprechenden Arbeitsbereichs (Wa) zu projizieren.

## Revendications

1. Appareil (1) pour l'inspection et/ou le traitement d'un matériau, en particulier du cuir, comportant :
- un plan de travail (2) adapté pour fournir une surface de support pour le matériau, ledit plan de travail (2) ayant au moins une première paire de côtés opposés (2a) et au moins une seconde paire de côtés opposés (2b),
- une unité de commande (C) adaptée pour gérer l'appareil (1), et
- un système d'éclairage (15) comportant au moins :
- un premier ensemble de sources lumineuses (15') qui sont disposées et configurées pour éclairer le plan de travail (2) à partir d'une position élevée par rapport audit plan de travail (2), en fonction d'un premier angle d'incidence avec ledit plan de travail (2), et
- un second ensemble de sources lumineuses (15") qui sont disposées et configurées pour émettre de la lumière rasante sur le plan de travail (2), en fonction d'un second angle d'incidence avec ledit plan de travail (2), ledit second angle d'incidence étant inférieur au premier angle d'incidence,
**caractérisé en ce que** le second ensemble de sources lumineuses (15") comporte une première pluralité de sources lumineuses (15"a) disposées sur au moins un des deux côtés opposés (2a) de la première paire de côtés opposés, et une seconde pluralité de sources lumineuses (15"b) disposées sur au moins un des deux côtés opposés (2b) de la seconde paire de côtés opposés.

2. Appareil (1) selon la revendication 1, **caractérisé en ce qu'**il est configuré pour permettre un ajustement relatif entre la première pluralité de sources lumineuses (15"a) et la seconde pluralité de sources lumineuses (15"b), par exemple en ajustant l'intensité relative et/ou la température de couleur entre lesdites sources lumineuses.

3. Appareil (1) selon la revendication 1 ou 2, **caractérisé en ce qu'**il est configuré pour permettre un ajustement relatif du premier ensemble de sources lumineuses (15') et du second ensemble de sources lumineuses (15"), dans lequel, lors dudit ajustement relatif, ledit appareil (1) est configuré pour permettre l'activation sélective d'un élément parmi le premier ensemble de sources lumineuses (15') ou le second ensemble de sources lumineuses (15"), et/ou est configuré pour ajuster l'intensité relative entre ledit premier ensemble de sources lumineuses (15') et ledit second ensemble de sources lumineuses (15").

4. Appareil (1) selon l'une quelconque des revendications précédentes, dans lequel l'unité de commande (C) comporte une unité de mémoire (MEM) comprenant une pluralité d'instructions de fonctionnement, chaque instruction de fonctionnement correspondant à un mode d'éclairage dudit système d'éclairage (15), et dans lequel ledit appareil (1) comporte en outre des moyens configurés pour permettre la sélection d'un mode d'éclairage parmi lesdits modes d'éclairage mémorisés, ladite unité de commande (C) étant configurée pour commander le système d'éclairage (15) sur la base de ladite sélection.

5. Appareil (1) selon la revendication 4, dans lequel l'unité de mémoire (MEM) comporte une pluralité d'instructions de fonctionnement mémorisées pour une pluralité respective de matériaux, chaque instruction correspondant à un mode d'éclairage spécifique du système d'éclairage (15), ledit mode d'éclairage spécifique étant adapté au matériau correspondant et pouvant être sélectionné au moyen de l'unité de commande (C).

6. Appareil (1) selon la revendication 5, dans lequel, dans un premier mode d'éclairage, l'unité de commande (C) est configurée pour régler une première intensité et/ou température de couleur du système d'éclairage (15), et dans lequel, dans au moins un second mode d'éclairage, l'unité de commande (C) est configurée pour régler une seconde intensité et/ou température de couleur du système d'éclairage (15) qui est différente de la première intensité et/ou température de couleur.

7. Appareil (1) selon l'une quelconque des revendications précédentes, dans lequel le second ensemble de sources lumineuses (15") comporte, sur le(s) coté(s) respectif(s) du plan de travail (2), une pluralité de sources lumineuses disposées côte à côte et une pluralité de lentilles respectives configurées pour générer un faisceau lumineux ayant un angle d'ouverture variant entre 5° et 25°.

8. Appareil (1) selon l'une quelconque des revendications précédentes, dans lequel le second ensemble de sources lumineuses (15") comporte, sur le(s) côté(s) respectif(s) du plan de travail (2), une pluralité de sources lumineuses configurées pour générer un faisceau lumineux ayant un angle d'incidence avec le plan de travail (2) variant entre 0 et 30°.

9. Appareil (1) selon l'une quelconque des revendications précédentes, dans lequel le second ensemble de sources lumineuses (15") comporte une pluralité de sources lumineuses disposées sur au moins deux rangées parallèles, et dans lequel, facultativement, des sources lumineuses disposées sur une rangée sont configurées pour générer un faisceau lumineux ayant un angle d'incidence avec le plan de travail (2) qui est différent par rapport à l'angle d'incidence de sources lumineuses disposées sur une autre rangée.

10. Appareil (1) selon l'une quelconque des revendications précédentes, dans lequel les côtés de la première paire de côtés opposés (2a) sont des côtés de plus grande extension, et les côtés de la seconde paire de côtés opposés (2b) sont des côtés de plus petite extension, dans lequel la première pluralité de sources lumineuses (15"a) est disposée sur au moins un des deux côtés opposés (2a) de plus grande extension, et dans lequel la seconde pluralité de sources lumineuses (15"b) est disposée sur au moins un des deux côtés opposés (2b) de plus petite extension, ledit plan de travail (2) ayant de préférence une forme rectangulaire.

11. Appareil (1) selon l'une quelconque des revendications précédentes, comportant au moins un détecteur d'images (30) adapté pour acquérir des images et/ou des vidéos du matériau sur le plan de travail (2), dans lequel l'unité de commande (C) est configurée pour permettre la commutation du système d'éclairage (15) au moins entre un premier mode de fonctionnement, qui est adapté pour permettre l'inspection du matériau par l'opérateur, et un second mode de fonctionnement, qui est adapté pour permettre l'acquisition d'images et/ou de vidéos au moyen dudit détecteur d'images (30) et qui correspond à un réglage différent du système d'éclairage (15), dans lequel les paramètres de fonctionnement optimaux dudit au moins un détecteur d'images (30) sont optimisés par rapport au réglage du système d'éclairage (15) dans ledit second mode de fonctionnement, et dans lequel, lors de la commutation entre le premier mode de fonctionnement et le second mode de fonctionnement, lesdits paramètres du détecteur d'images (30) ne sont pas modifiés.

12. Appareil (1) selon l'une quelconque des revendications précédentes, comportant en outre au moins un projecteur (20, 21) adapté pour projeter des éléments sur le plan de travail (2).

13. Appareil (1) selon la revendication 12, dans lequel l'unité de commande (C) est configurée pour définir une pluralité de zones de travail (Wa) sur la base desquelles le matériau (M) disposé sur le plan de travail (2) est virtuellement subdivisé, et dans lequel le projecteur (20, 21) est configuré pour projeter sur le plan de travail (2) des profils (Wap) correspondant auxdites zones de travail (Wa), chacun desdits profils (Wap) étant adapté pour identifier une seule zone de travail par rapport aux autres zones de travail, dans lequel le projecteur (20, 21) est configuré pour projeter les profils (Wap) correspondant aux zones de travail individuelles (Wa) séparément les uns des autres, dans lequel l'unité de commande (C) est adaptée pour permettre la sélection d'un profil spécifique et donc la commutation de la projection d'un profil à la projection d'un profil différent, et dans lequel ladite unité de commande (C) est en outre adaptée pour commander le système d'éclairage (15) sur la base du profil (Wap) projeté spécifique.

14. Appareil (1) selon la revendication 13, dans lequel l'unité de commande (C) est en outre configurée pour commander le système d'éclairage (15) de manière à éteindre, ou à maintenir à une intensité réduite, des sources lumineuses du système d'éclairage (15) qui correspondent à des zones de travail non projetées.

15. Appareil (1) selon l'une quelconque des revendications 13 ou 14, dans lequel :
- les profils (Wap) projetés ont une forme carrée ou rectangulaire,
- le plan de travail (2) est équipé de moyens de mouvement configurés pour permettre le mouvement du matériau le long d'une direction de déplacement (Dir),
- l'appareil (1) comporte des moyens pour permettre l'actionnement des moyens de mouvement sur la base d'une entrée d'utilisateur, et
- l'unité de commande (C) est configurée pour définir la taille d'un côté de ladite forme carrée ou rectangulaire du profil (Wap) projeté, ledit côté s'étendant le long d'une direction (D) opposée à la direction de déplacement (Dir), sur la base de l'extension du matériau (M) le long de ladite direction (D), et pour ajuster la taille d'un côté de ladite forme carrée ou rectangulaire du profil (Wap) projeté, ledit côté s'étendant le long de la direction de déplacement (Dir), en fonction du déplacement du matériau (M) le long de ladite direction de déplacement (Dir).

16. Appareil (1) selon l'une quelconque des revendications précédentes, **caractérisé en ce qu'**il s'agit d'une machine d'inspection comportant une pluralité de détecteurs d'images (30) adaptés pour acquérir des images du matériau sur le plan de travail (2), dans lequel l'unité de commande (C) est configurée pour traiter les images acquises par lesdits détecteurs d'images (30) et pour générer une copie numérique du matériau inspecté.

17. Appareil (1) selon la revendication 13 et selon la revendication 16, dans lequel le projecteur (21) comporte au moins un projecteur à laser, ledit projecteur à laser étant adapté pour projeter, en plus du profil (Wap), également des défauts du matériau identifiés par l'opérateur, par l'intermédiaire d'un élément de signalisation (31), à l'intérieur de la zone de travail (Wa) correspondante.
